# EUROPÄISCHE PATENTSCHRIFT

(11) **EP 1 887 682 B1**
(45) Veröffentlichungstag und Bekanntmachung des Hinweises auf die Patenterteilung: **28.02.2018**
(21) Anmeldenummer: 07111776.6
(22) Anmeldetag: 05.07.2007
(51) Int. Cl.: H02M 3/335

(54) **Schaltnetzteil mit Transformator**
Switching power supply with transformer
Alimentation de puissance à découpage dotée d'un transformateur

(30) Priorität: 08.08.2006 DE 102006037044
(43) Veröffentlichungstag der Anmeldung: 13.02.2008
(73) Patentinhaber: Siemens Aktiengesellschaft, 80333 München (DE)
(72) Erfinder: Cesnak PhD., Lorand, 1050, Wien (AT); Kogard, Markus, 2102, Hagenbrunn (AT)
(74) Vertreter: Maier, Daniel Oliver

(56) Entgegenhaltungen:
- DE-A1- 3 219 964
- JP-A- S6 364 568
- JP-A- H05 260 743
- JP-A- H06 261 542
- JP-A- H10 271 820
- JP-A- 2002 202 336
- US-A1- 2002 122 320
- US-A1- 2004 037 098

## Beschreibung

Die Erfindung betrifft ein Schaltnetzteil mit einem Transformator, wenigstens eine Primärwicklung und wenigstens eine Sekundärwicklung umfassend, wobei im Schaltnetzteil primärseitig ein Schaltregler angeordnet ist und wobei sekundärseitig eine Reglerschaltung zur Spannungs- und/oder Stromregelung angeordnet ist, die aus einer gleichgerichteten und geglätteten Ausgangsspannung ein Stellsignal bildet, welches dem Schaltregler über ein Übertragungselement zugeführt ist.

Schaltnetzteile sind als Stromversorgungseinrichtungen für diverse Anwendungen allgemein bekannt. Dabei wird in der Regel ein Wechselstrom aus einem öffentlichen Netz in einem Zwischenkreis gleichgerichtet und mit einer weit über der Netzfrequenz liegenden Taktfrequenz in einem Transformator umgewandelt, um auf der Sekundärseite des Transformators wiederum gleichgerichtet zu werden. In der Regel wird dabei eine konstante Ausgangsgleichspannung bereitgestellt.

Die Ausgangsgleichspannung wird dabei üblicherweise mittels Pulsweitenmodulation geregelt. Eine entsprechende Regelung ist beispielsweise aus der Produktbeschreibung zum Schaltregler TNY263-268, TinySwitch-II Family, der Firma Power Integrations vom April 2005 bekannt, wobei als Topologie ein Sperrwandler angegeben ist. Daneben sind für Schaltnetzteile auch andere Topologien wie Flusswandler oder Gegentaktwandler bekannt.

Zur Regelung einer konstanten Ausgangsgleichspannung wird laufend deren aktueller Wert erfasst und z.B. mittels einer einstellbaren Zenerdiode mit einem Referenzwert abgeglichen. Daraus wird mittels einer sekundärseitigen Reglerschaltung ein Stellsignal für den primärseitigen Schaltregler ermittelt, wobei dieses Stellsignal in der Regel mittels eines Optokopplers von der Sekundär- zur Primärseite übertragen wird. Der Schaltregler schaltet dabei mittels Schaltimpulse eine Primärwicklung des Transformators an eine Zwischenkreisspannung. Eine derartige Anordnung ist beispielsweise aus der US 611 1763 A1 bekannt.

Wenn als Schaltregler, welcher die primärseitigen Schaltzyklen bestimmt, ein Breitbandregler eingesetzt wird (z.B. TNY263-268 der Fa. Power Integrations), dann zeigt sich folgendes Regelungsverhalten:
Zu Beginn jedes Taktzyklus bestimmt der Schaltregler in Abhängigkeit des vom Optokoppler von der Sekundärseite übertragenen Stellsignals, ob ein Schaltimpuls bzw. Schaltzyklus erfolgt oder ob der Taktzyklus zur Aufrechterhaltung der Regelbarkeit bei geringen Ausgangsleistungen ohne Schaltimpuls verstreicht.

Dazu liegt beispielsweise das vom Optokoppler von der Sekundärseite übertragene Stellsignal an einem so genannter Enable/Under-Voltage (EN/UV) Pin des Schaltreglers an, wobei vom Schaltregler anhand der vorherigen Abtastwerte eine Stromgrenze bestimmt wird. Bei hohen Ausgangsleistungen mit großen an das Schaltnetzteil angeschlossenen Lasten liegt an diesem EN/UV-Pin ein Stellsignal als hohe Spannung an und es wird ein Schaltzyklus mit hoher Strombegrenzung gestartet. Bei kleineren Lasten wird ein Schaltzyklus mit kleineren Strombegrenzungen gestartet.

Bei Lasten, welche nahe an der Maximallast liegen, werden vom Schaltregler nahezu zu jedem Taktzyklus Schaltimpulse bzw. Schaltzyklen gestartet. Wird die Last verringert, werden immer mehr Schaltimpulse ausgesetzt und die Stromgrenze reduziert, um die Regelbarkeit der Ausgangsspannung zu gewährleisten. Bei sehr kleinen Lasten wird schließlich die Strombegrenzung auf ein Minimum reduziert und es sind nur für wenige Taktzyklen Schaltimpulse vorhanden.

Die verbleibenden Schaltimpulse werden dabei zu Paketen zusammengefasst. Es werden beispielsweise nach mehreren impulslosen Taktzyklen 2-fach oder 3-fach Schaltimpulse über zwei bzw. drei aufeinander folgende Taktzyklen hinweg angestoßen. Daraus resultiert ein nicht erwünschter Ausgangsrippel, welcher somit mit einem Breitband- bzw. PI-Regler prinzipbedingt ist.

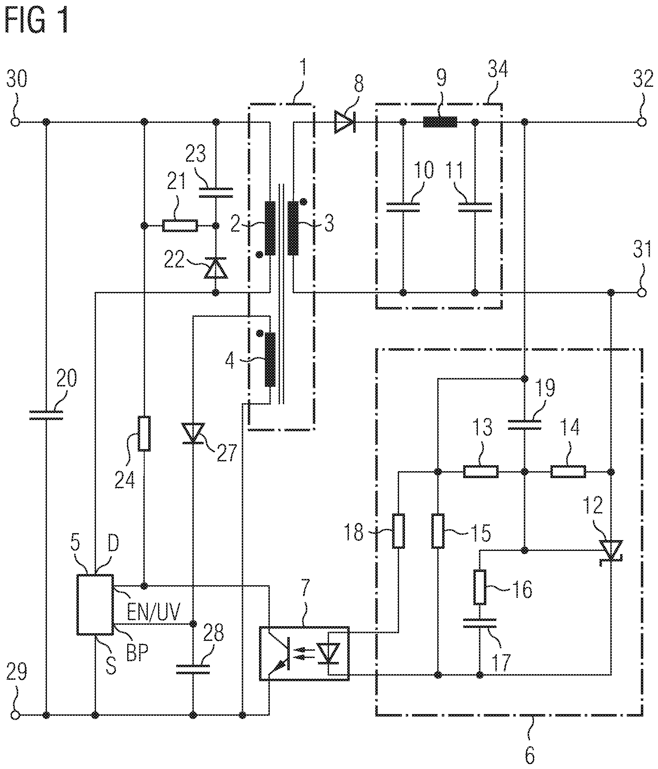

Nach dem Stand der Technik werden zur Reduzierung eines Ausgangsrippels hochwertige passive Filter mit PI-Reglern oder PID-Regler (siehe Figur 1) eingesetzt, womit jedoch entsprechende Herstellungskosten verbunden sind.

Aus der Schrift JPS6364568, welche als nächstliegender Stand der Technik angesehen wird, ist ein Schaltnetzteil bekannt, bei welchen zusätzlich zu einer PWM-Regelung sekundärseitig ein Drei-Terminal-Regler eingesetzt wird, um einen Rippel zu reduzieren. Damit sind ebenfalls entsprechende Herstellungskosten und eine komplexe Schaltung verbunden.
Der Erfindung liegt die Aufgabe zugrunde, für ein Schaltnetzteil der eingangs genannten Art eine Verbesserung gegenüber dem Stand der Technik anzugeben.
Erfindungsgemäß wird diese Aufgabe gelöst durch ein Schaltnetzteil nach Anspruch 1 mit einem Transformator, wenigstens eine Primärwicklung und wenigstens eine Sekundärwicklung umfassend, wobei im Schaltnetzteil primärseitig ein Schaltregler angeordnet ist und wobei sekundärseitig eine Reglerschaltung zur Spannungs- und/oder Stromregelung angeordnet ist, die aus einer gleichgerichteten und geglätteten Ausgangsspannung ein Stellsignal bildet, welches dem Schaltregler über ein Übertragungselement zugeführt ist und wobei der Reglerschaltung zusätzlich eine gleichgerichtete, aber nicht geglättete sekundärseitige Spannung zugeführt ist.

Weiterhin ist vorgesehen, dass die Reglerschaltung einen ersten Schaltungsteil umfasst, welcher das Bezugspotenzial und den Ausgang des Glättungsfilters mit einem ersten Anschluss des Übertragungselements verbindet und dass ein zweiter Anschluss des Übertragungselements über eine aus einem Widerstand und einem Kondensator gebildete Parallelschaltung mit einem Verbindungspunkt zwischen Gleichrichterelement und Glättungsfilter verbunden ist.

Damit überträgt das Übertragungselement einen Rippel der gleichgerichteten, aber nicht geglätteten sekundärseitigen Spannung direkt zum Schaltregler, wobei als Verzögerung nur die des Übertragungselements zum Tragen kommt. Das mit dem Rippel beaufschlagte Stellsignal bewirkt, dass der Schaltregler Schaltzyklen nicht zu Paketen zusammenfasst. Bei geringen Lasten am Schaltnetzteilausgang werden also keine 2-fach oder 3-fach Schaltimpulse über zwei bzw. drei aufeinander folgende Taktzyklen hinweg angestoßen. Gegenüber dem Stand der Technik verringert sich dadurch der unerwünschte Rippel am Ausgang des Schaltnetzteils.

Damit ist eine einfache Schaltung entsprechend der Lehre der vorliegenden Erfindung angegeben. Das Übertragungselement und die aus einem Widerstand und einem Kondensator gebildete Parallelschaltung beeinflussen dabei nicht die sekundärseitige Regelung, da der Verbindungspunkt vor dem Glättungsfilter angeordnet ist.

Zugleich ist durch die erfindungsgemäße Schaltung eine hohe Regelungsgenauigkeit sichergestellt, da die Regelungsschaltung weiterhin mit der gleichgerichteten und geglätteten Ausgangsspannung beaufschlagt ist.

Eine vorteilhafte Ausprägung der Erfindung sieht vor, dass ein erstes Ende der Sekundärwicklung mit einem Bezugspotenzial verbunden ist und dass ein zweites Ende der Sekundärwicklung über ein Gleichrichterelement und ein Glättungsfilter an eine Last anschließbar ist

Von Vorteil ist es zudem, wenn der erste Schaltungsteil der Reglerschaltung eine einstellbare Zenerdiode, einen ersten, zweiten, dritten und vierten Widerstand sowie einen Kondensator umfasst, wenn die Anode der einstellbaren Zenerdiode mit dem Bezugspotenzial verbunden ist und wenn der erste und zweite Widerstand in Reihe zwischen das Bezugspotenzial und den Ausgang des Glättungsfilters geschalten sind. Dabei ist des Weiteren ein Verbindungspunkt zwischen erstem und zweitem Widerstand mit einem Referenzeingang der einstellbaren Zenerdiode verbunden und dieser Referenzeingang über den vierten Widerstand in Reihe mit dem Kondensator mit dem ersten Anschluss des Übertragungselements verbunden und zudem dieser erste Anschluss des Übertragungselements über den dritten Widerstand mit dem Ausgang des Glättungsfilters verbunden.

Dieser Aufbau der sekundärseitigen Regelung erlaubt eine gute Feinjustierung und eine hohe Regelgenauigkeit, wobei der Bauteileinsatz gering gehalten ist.

Günstig ist es, wenn das Glättungsfilter einen Kondensator und eine Drossel umfasst. Damit werden die Rippel am Ausgang besonders gering gehalten, wodurch zusätzlich die Regelungsgenauigkeit gesteigert wird und das Schaltnetzteil für Lasten einsetzbar ist, welche auf Versorgungsspannungsabweichungen sensible reagieren.

Das Übertragungselement ist günstigerweise als Optokoppler ausgebildet. Damit ist auf einfache Weise eine galvanische Trennung zwischen Primär- und Sekundärseite realisiert.

Die Erfindung wird nachfolgend in beispielhafter Weise unter Bezugnahme auf die beigefügten Figuren erläutert. Es zeigen in schematischer Darstellung:
- Fig. 1: Schaltnetzteil nach dem Stand der Technik
- Fig. 2: Erfindungsgemäßes Schaltnetzteil

Das in Figur 1 dargestellte Schaltnetzteil nach dem Stand der Technik ist beispielhaft als Sperrwandlerschaltung dargestellt. In einem Transformator 1 ist eine Primärwicklung 2, eine Sekundärwicklung 3 und eine primärseitige Hilfswicklung 4 zur Versorgung eines Schaltreglers 5 angeordnet. Der Schaltregler 5 ist beispielsweise vom Typ TNY263-268 der Firma Power Integrations mit vier Anschlüssen. Ein erster Anschluss ist ein so genannter Enable/Under-Voltage-Anschluss EN/UV. Über ein an diesem Anschluss anliegendes Signal wird bestimmt, ob ein Schaltzyklus gestartet wird. Über einen Bypass-Anschluss BP wird der Schaltregler versorgt. Die beiden anderen Anschlüsse D und S bilden den Drain-Anschluss D und den Source-Anschluss S eines im Schaltregler 5 integrierten Feldeffekttransistors (MOSFET).

Ein erstes Ende der Primärwicklung 2 ist mit der Eingangsspannung 30 verbunden und ein zweites Ende der Primärwicklung 2 ist über den Schaltregler 5 an ein primärseitiges Bezugspotenzial 29 geschaltet. Die Eingangsspannung 30 wird dabei von einem Zwischenkreiskondensator 20 geglättet. Parallel zur Primärwicklung 2 ist zudem eine Spitzenklopferdiode 22 mit einem in Reihe geschalteten Kondensator 23 angeordnet. Um die Einschaltschwelle zu bestimmen ist ein Widerstand 24 vorgesehen, wobei dieser Widerstand 24 in Serie zwischen die Eingasspannung 30 und den Enable/Under-Voltage-Anschluss EN/UV des Schaltreglers geschaltet sind. Ein weiterer Widerstand 21 verbindet einen Verbindungspunkt zwischen Spitzenklopferdiode 22 und dem dazu in Reihe geschalteten Kondensator 23 mit der Eingangsspannung 30.

Die Hilfswicklung 4 ist gegengleich zur Primärwicklung 2 um den Transformatorkern gewickelt und ist mit einem ersten Ende mit dem primärseitigen Bezugspotenzial 29 verbunden. Ein zweites Ende ist über eine Diode 27 an den Bypass-Anschluss BP angeschaltet, wobei zwischen diesem Bypass-Anschluss BP und dem primärseitigen Bezugspotenzial 29 ein weiterer Kondensator 28 geschaltet ist.

Der Enable/Under-Voltage-Anschluss EN/UV des Schaltreglers 5 ist über den Fototransistor eines Optokopplers mit dem primärseitigen Bezugspotenzial 29 verbunden. Über diesen Optokoppler wird ein von einer sekundärseitigen Reglerschaltung 6 generiertes Stellsignal auf die Primärseite übertragen und dem Enable/Under-Voltage-Anschluss EN/UV zugeführt.

Am Transformator 1 ist eine Sekundärwicklung 3 angeordnet, welche gegengleich zur Primärwicklung 2 gewickelt ist.

Das Wicklungsende der Sekundärwicklung 3 ist zudem mit einem sekundärseitigen Bezugspotenzial 31 verbunden. Der Wicklungsanfang der Sekundärwicklung 3 ist über eine Gleichrichterdiode 8, einen ersten Glättungskondensator 10, eine Drossel 9 und einen zweiten Glättungskondensator 11 mit dem Ausgang des Schaltnetzteils verbunden, an welchem die Ausgangsspannung 32 anliegt. Die beiden Glättungskondensatoren 10 und 11 und die Drossel 9 bilden dabei einen Glättungsfilter 34. An die Ausgangsspannung 32 am Ausgang des Glättungsfilters 34 und das sekundärseitige Bezugspotenzial 31 ist die sekundärseitige Reglerschaltung 6 angeschaltet.

Diese beispielhafte sekundärseitige Reglerschaltung 6 umfasst eine einstellbare Zenerdiode 12 als Referenzelement für einen Ausgangsspannungs-Sollwert und fünf Widerstände 13, 14, 15, 16, 18 sowie zwei Kondensatoren 17 und 19 zur Justierung. Dabei ist ein erster und ein zweiter Widerstand 13, 14 in Reihe zwischen das sekundärseitige Bezugspotenzial 31 und die Ausgangsspannung 32 geschaltet. Ein Verbindungspunkt zwischen diesen beiden Widerständen 13, 14 ist über einen ersten Kondensator 19 mit der Ausgangsspannung 32 und dem Referenzanschluss der einstellbaren Zenerdiode 12 verbunden.

Dieser Referenzanschluss ist zudem über einen weiteren Widerstand 16 und einen weiteren in Reihe geschalteten Kondensator 17 mit der Kathode der Leuchtdiode des als Optokoppler ausgebildeten Übertragungselements 7 verbunden. Die Anode der Leuchtdiode des Optokopplers ist über einen Vorwiderstand 18 an die Ausgangsspannung 32 geschaltet. Des Weiteren ist ein Widerstand 15 zwischen Ausgangsspannung 32 und Kathode der Leuchtdiode des Optokopplers angeordnet.

Wird mit einem in Figur 1 dargestellten Schaltelement nach dem Stand der Technik eine geringe Last betrieben, führt die niedrige Belastung der Ausgangsspannung 32 dazu, dass über das als Optokoppler ausgebildeten Übertragungselement 7 nur eine geringe Spannung als relativ konstantes Stellsignal an den Enable/Under-Voltage-Anschluss EN/UV des Schaltreglers 5 übertragen wird. Damit tritt ein durch die Funktionsweise des Schaltreglers bedingtes Problem der Impulspakete auf. Im unteren Leistungsbereich generiert der Schaltregler 5 so lange Schaltimpulspakete, bis eine vorgegebene Schwelle am Enable/Under-Voltage-Anschluss EN/UV erreicht wird. Dabei folgen jedem Schaltimpulspaket Taktzyklen ohne Schaltvorgang. Diese Schaltimpulspakete führen am Ausgang zu einem deutliche höheren Rippel gegenüber gleichmäßig über mehrere Taktzyklen verteilte Schaltimpulse.

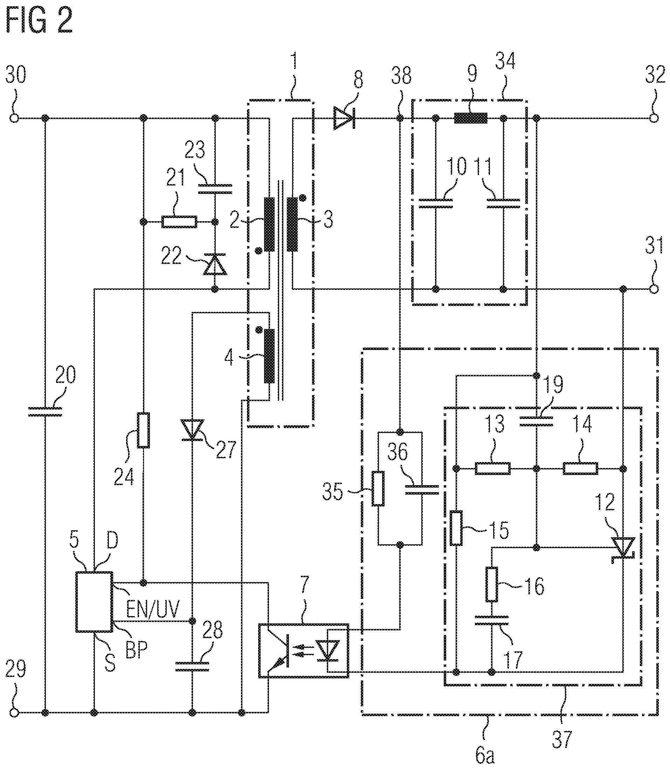

Eine solche gleichmäßige Verteilung der Schaltimpulse bei niedriger Belastung der Ausgangsspannung 32 wird mit einem erfindungsgemäßen Schaltnetzteil erreicht, für welches eine beispielhafte Ausführung in Figur 2 dargestellt ist. Zur Erläuterung der Erfindung ist wie in Figur 1 ein Sperrwandler angegeben. Die erfindungsgemäße Lösung ist aber auch auf andere Topologien wie Flusswandler, Gegentaktwandler etc. anwendbar.

Bis auf die sekundärseitige Reglerschaltung 6a entspricht die Anordnung der in Figur 1 dargestellten. Neu ist eine zweite Verbindung der Reglerschaltung 6a mit einer sekundärseitigen Spannung. Zusätzlich zur Anschaltung an die Ausgangsspannung 32 ist die Reglerschaltung 6a an einen Verbindungspunkt 38 zwischen Gleichrichterelement 8 und Glättungsfilter 34 angeordnet.

Im Unterschied zur Reglerschaltung 6 nach dem Stand der Technik ist die Anode der Leuchtdiode des als Optokoppler ausgebildeten Übertragungselements 7 nicht an die Ausgangsspannung 32, sondern über eine aus einem Widerstand 35 und einem Kondensator 36 gebildete Parallelschaltung an den Verbindungspunkt 38 zwischen Gleichrichterelement 8 und Glättungsfilter 34 angeschlossen. Diese aus einem Widerstand 35 und einem Kondensator 36 gebildete Parallelschaltung bewirkt, dass ein Teil des Rippels am Verbindungspunkt 38 über das Übertragungselement 7 an den Enable/Under-Voltage-Anschluss EN/UV des Schaltreglers 5 übertragen wird. Dadurch werden Impulspakete vermieden, da im Schaltregler 5 infolge des erzeugten Rippels am Stellsignal die obere Schwelle zur Bildung von Impulspaketen immer wieder überschritten wird. Damit erfolgen zwischen den Taktzyklen ohne Schaltimpulse nur einzelne Schaltzyklen und der Rippel am Ausgang des Schaltnetzteils wird gegenüber dem Stand der Technik reduziert.

Die Kathode der Leuchtdiode des als Optokoppler ausgebildeten Übertragungselements 7 bleibt dabei über einen ersten Schaltungsteil 37 der Reglerschaltung 6a mit dem sekundärseitigen Bezugspotenzial 31 und der Ausgangsspannung 32 verbunden, wodurch weiterhin eine hohe Regelgenauigkeit der Ausgangsspannung 32 gewährleistet ist. Dabei umfasst der erste Schaltungsteil 37 der Reglerschaltung 6a eine einstellbare Zenerdiode 12, einen ersten, zweiten, dritten und vierten Widerstand 13, 14, 15, 16 sowie einen ersten und zweiten Kondensator 17, 19, wobei die Anode der einstellbaren Zenerdiode 12 mit dem Bezugspotenzial 31 verbunden ist und der erster und zweite Widerstand 13, 14 in Reihe zwischen das Bezugspotenzial 31 und den Ausgang des Glättungsfilters 34 geschalten sind. Des Weiteren ist ein Verbindungspunkt zwischen erstem und zweitem Widerstand 13, 14 mit einem Referenzeingang der einstellbaren Zenerdiode 12 und über den zweiten Kondensator 19 mit der Ausgangsspannung 32 verbunden. Zusätzlich ist dieser Referenzeingang über den vierten Widerstand 16 in Reihe mit dem ersten Kondensator 17 an die Kathode des als Optokoppler ausgebildeten Übertragungselements 7 angeschaltet. Dabei ist die Kathode der Leuchtdiode des als Optokoppler ausgebildeten Übertragungselements 7 zusätzlich über den dritten Widerstand 15 mit dem Ausgang des Glättungsfilters 34 verbunden.

Der Anordnung der Bauteile innerhalb der Regelungsschaltung 6a ist dabei beispielhaft und dient einer guten Justierbarkeit der Regelung. Für eine erfindungsgemäße Lösung können auch andere Anordnungen mit weniger Bauteilen und reduzierter Justierbarkeit gewählt werden.

## Patentansprüche

1. Schaltnetzteil mit einem Transformator (1), wenigstens eine Primärwicklung (2) und wenigstens eine Sekundärwicklung (3) umfassend, wobei im Schaltnetzteil primärseitig ein Schaltregler (5) angeordnet ist und wobei sekundärseitig eine Reglerschaltung (6a) zur Spannungs- und/oder Stromregelung angeordnet ist, die aus einer gleichgerichteten und geglätteten Ausgangsspannung (32) ein Stellsignal bildet, welches dem Schaltregler (5) über ein Übertragungselement (7) zugeführt ist, **dadurch gekennzeichnet, dass** der Reglerschaltung (6a) zusätzlich eine gleichgerichtete, aber nicht geglättete sekundärseitige Spannung zugeführt ist, und dass die Reglerschaltung (6a) einen ersten Schaltungsteil (37) umfasst, welcher ein Bezugspotenzial (31) eines Glättungsfilters (34) und einen Ausgang des Glättungsfilters (34) mit einem ersten Anschluss des Übertragungselements (7) verbindet und dass ein zweiter Anschluss des Übertragungselements (7) über eine aus einem Widerstand (35) und einem Kondensator (36) gebildete Parallelschaltung mit einem Verbindungspunkt (38) zwischen einem Gleichrichterelement (8) und dem Glättungsfilter (34) verbunden ist.

2. Schaltnetzteil nach Anspruch 1, **dadurch gekennzeichnet, dass** ein erstes Ende der Sekundärwicklung (3) mit dem Bezugspotenzial (31) verbunden ist und dass ein zweites Ende der Sekundärwicklung (3) über das Gleichrichterelement (8) und ein Glättungsfilter (34) an eine Last anschließbar ist und dass die Reglerschaltung (6a) einen ersten Schaltungsteil (37) umfasst.

3. Schaltnetzteil nach einem der Ansprüche 1 oder 2, **dadurch gekennzeichnet, dass** der erste Schaltungsteil (37) der Reglerschaltung (6a) eine einstellbare Zenerdiode (12), einen ersten, zweiten, dritten und vierten Widerstand (13, 14, 15, 16) sowie einen Kondensator (17) umfasst, dass die Anode der einstellbaren Zenerdiode (12) mit dem Bezugspotenzial (31) verbunden ist und dass der erste und der zweite Widerstand (13, 14) in Reihe zwischen das Bezugspotenzial (31) und den Ausgang des Glättungsfilters (34) geschalten sind, dass ein Verbindungspunkt zwischen erstem und zweitem Widerstand (13, 14) mit einem Referenzeingang der einstellbaren Zenerdiode (12) verbunden ist und dass dieser Referenzeingang über den vierten Widerstand (16) in Reihe mit dem Kondensator (17) mit dem ersten Anschluss des Übertragungselements (7) verbunden ist und dass des Weiteren dieser erste Anschluss des Übertragungselements (7) über den dritten Widerstand (15) mit dem Ausgang des Glättungsfilters (34) verbunden ist.

4. Schaltnetzteil nach einem der Ansprüche 1 bis 3, **dadurch gekennzeichnet, dass** das Glättungsfilter (34) einen Kondensator (10) und eine Drossel (9) umfasst.

5. Schaltnetzteil nach einem der Ansprüche 1 bis 4, **dadurch gekennzeichnet, dass** das Übertragungselement (7) als Optokoppler ausgebildet ist.

## Claims

1. Switching power supply with a transformer (1), comprising at least one primary winding (2) and at least one secondary winding (3), wherein a switching regulator (5) is arranged on the primary side in the switching power supply and wherein a regulator circuit (6a) for the regulation of voltage and/or current is arranged on the secondary side, which from a rectified and smoothed output voltage (32) forms a control signal that is provided to the switching regulator (5) by way of a transmission element (7), **characterised in that** the regulator circuit (6a) is additionally provided with a rectified but not smoothed secondary-side voltage, and **in that** the regulator circuit (6a) comprises a first circuit component (37) that connects a reference potential (31) of a smoothing filter (34) and an output of the smoothing filter (34) to a first terminal of the transmission element (7) and **in that** a second terminal of the transmission element (7) is connected by way of a parallel circuit formed from a resistor (35) and a capacitor (36) to a connection point (38) between a rectifying element (8) and the smoothing filter (34).

2. Switching power supply according to claim 1, **characterised in that** a first end of the secondary winding (3) is connected to the reference potential (31) and **in that** a second end of the secondary winding (3) can be connected by way of the rectifying element (8) and a smoothing filter (34) to a load and **in that** the regulator circuit (6a) comprises a first circuit component (37).

3. Switching power supply according to one of claims 1 or 2, **characterised in that** the first circuit component (37) of the regulator circuit (6a) comprises an adjustable Zener diode (12), a first, second, third and fourth resistor (13, 14, 15, 16) and a capacitor (17), **in that** the anode of the adjustable Zener diode (12) is connected to the reference potential (31) and **in that** the first and second resistor (13, 14) are connected in series between the reference potential (31) and the output of the smoothing filter (34), **in that** a connection point between the first and second resistor (13, 14) is connected to a reference input of the adjustable Zener diode (12) and **in that** this reference input is connected by way of the fourth resistor (16) in series with the capacitor (17) to the first terminal of the transmission element (7), and **in that** this first terminal of the transmission element (7) is further connected by way of the third resistor (15) to the output of the smoothing filter (34).

4. Switching power supply according to one of claims 1 to 3, **characterised in that** the smoothing filter (34) comprises a capacitor (10) and a choke (9).

5. Switching power supply according to one of claims 1 to 4, **characterised in that** the transmission element (7) is embodied as an optocoupler.

## Revendications

1. Alimentation de puissance à découpage dotée d'un transformateur (1), comprenant au moins un enroulement primaire (2) et au moins un enroulement secondaire (3), dans l'alimentation de puissance à découpage étant agencé, côté primaire, un régulateur de commutation (5) et, côté secondaire, un circuit régulateur (6a) pour la régulation de la tension et/ou du courant, lequel forme, à partir d'une tension de sortie (32) redressée et lissée, un signal de réglage qui est amené au régulateur de commutation (5) via un élément de transmission (7), **caractérisée en ce qu'**est en outre amenée au circuit régulateur (6a) une tension côté secondaire redressée, mais non lissée, et **en ce que** le circuit régulateur (6a) comprend une première partie de circuit (37) qui relie un potentiel de référence (31) d'un filtre de lissage (34) et une sortie du filtre de lissage (34) avec un premier raccord de l'élément de transmission (7) et **en ce qu'**un deuxième raccord de l'élément de transmission (7) est relié, via un circuit parallèle foré d'une résistance (35) et d'un condensateur (36), à un point de connexion (38) entre un élément redresseur (8) et le filtre de lissage (34).

2. Alimentation de puissance à découpage selon la revendication 1, **caractérisée en ce qu'**une première extrémité de l'enroulement secondaire (3) est reliée au potentiel de référence (31) et **en ce qu'**une deuxième extrémité de l'enroulement secondaire (3) peut être raccordée à une charge via l'élément redresseur (8) et un filtre de lissage (34) et **en ce que** le circuit régulateur (6a) comprend une première partie de circuit (37).

3. Alimentation de puissance à découpage selon l'une des revendications 1 ou 2, **caractérisée en ce que** la première partie de circuit (37) du circuit régulateur (6a) comprend une diode Zener réglable (12), une première, une deuxième, une troisième et une quatrième résistance (13, 14, 15, 16) ainsi qu'un condensateur (17), **en ce que** l'anode de la diode Zener réglable (12) est reliée au potentiel de référence (31) et **en ce que** la première et la deuxième résistance (13, 14) sont montées en série entre le potentiel de référence (31) et la sortie du filtre de lissage (34), **en ce qu'**un point de connexion entre la première et la deuxième résistance (13, 14) est relié à une entrée de référence de la diode Zener réglable (12) et **en ce que** cette entrée de référence est reliée au premier raccord de l'élément de transmission (7) via la quatrième résistance (16) en série avec le condensateur (17) et **en ce que**, en outre, ce premier raccord de l'élément de transmission (7) est relié à la sortie du filtre de lissage (34) via la troisième résistance (15).

4. Alimentation de puissance à découpage selon l'une des revendications 1 à 3, **caractérisée en ce que** le filtre de lissage (34) comprend un condensateur (10) et un étrangleur (9).

5. Alimentation de puissance à découpage selon l'une des revendications 1 à 4, **caractérisée en ce que** l'élément de transmission (7) est réalisé en tant qu'optocoupleur.
